# FASCICULE DE BREVET EUROPEEN

(11) **EP 3 347 218 B1**
(45) Date de publication et mention de la délivrance du brevet: **14.04.2021**
(21) Numéro de dépôt: 16767333.4
(22) Date de dépôt: 06.09.2016
(51) Int. Cl.: B60J 1/00, B61D 25/00, B60J 1/10

(54) **VITRAGE LATÉRAL DE MOYEN DE TRANSPORT À FIXATION PAR L'EXTÉRIEUR**
SEITLICHE VERGLASUNG EINES VERKEHRSMITTELS ZUR BEFESTIGUNG VON AUSSEN
LATERAL GLAZING OF A MEANS OF TRANSPORT TO BE FIXED FROM THE OUTSIDE

(30) Priorité: 09.09.2015 FR 1558382
(43) Date de publication de la demande: 18.07.2018
(73) Titulaire: SAINT-GOBAIN GLASS FRANCE, 92400 Courbevoie (FR)
(72) Inventeur: GASTAL, Guillaume, 68200 Zary (PL); ODULINSKY, Andrzej, 68200 Zary (PL)
(74) Mandataire: Saint-Gobain Recherche
(86) Numéro de dépôt international: PCT/FR2016/052202
(87) Numéro de publication internationale: WO 2017/042465

(56) Documents cités:
- WO-A2-2004/033238
- CN-U- 204 368 159
- DD-A1- 233 977
- JP-U- S4 925 112
- JP-U- S6 136 428

## Description

L'invention concerne la réalisation d'un vitrage latéral d'un moyen de transport, et en particulier un vitrage de tramway ou de train, ledit vitrage étant un vitrage fixe, éventuellement feuilleté.

Un tel vitrage comprend habituellement :
- un élément vitré ayant une face extérieure qui fait face à un espace extérieur, une face intérieure qui fait face à un espace intérieur, ainsi qu'un chant périphérique,
- au moins une platine ayant une face extérieure située en vis-à-vis de la face intérieure dudit élément vitré, une face intérieure orientée vers ledit espace intérieur, ainsi qu'un chant périphérique, et ladite face extérieure de ladite platine étant collée à ladite face intérieure dudit élément vitré par l'intermédiaire d'une couche de colle,
- un cordon profilé périphérique, situé, au moins en partie sur ladite face intérieure et plus en périphérie de ladite face intérieure dudit élément vitré que ladite platine,
- une tige filetée qui s'étend sensiblement perpendiculairement à ladite face intérieure dudit élément vitré et en direction dudit espace intérieur.

L'art antérieur connaît ainsi le brevet américain N° US 7,080,874 qui expose une solution permettant de fixer un vitrage dans une baie.

Dans ce document, il est proposé que la tige filetée soit fixée à la platine en face intérieure de la platine.

L'art antérieur connaît aussi la demande de brevet européen N° EP 2 796 334 une autre solution permettant de fixer un vitrage dans une baie.

Le but de l'invention est de permettre de réaliser un vitrage, fixe, éventuellement feuilleté, qui est plus facile à fixer que dans l'art antérieur.

En effet, l'élément vitré, la baie, ainsi que le positionnement de la platine à l'élément vitré présentent chacun une tolérance de fabrication et dans la pratique, le positionnement respectif des uns par rapport aux autres, a fortiori lorsqu'il y a plusieurs platines par vitrage (ce qui est recommandé) et a fortiori lorsque l'élément vitré est feuilleté (ce qui peut être nécessaire pour des raisons de sécurité, pour certaines applications), peut engendrer des différences par rapport à la position nominale voulue selon les plans.

Cet écart possible entre les positions nominales et les positions réelles des constituants du vitrage et du moyen de transport est un problème important surtout lors du remplacement d'un vitrage après rupture car il est recherché que ce remplacement soit le plus facile et le plus rapide possible afin de limiter le coût d'immobilisation du moyen de transport.

L'invention repose ainsi sur le fait de prévoir que la tige filetée puisse être entraînée en rotation sur elle-même par un outil adéquat depuis l'espace extérieur ou bloquée en rotation depuis l'espace extérieur.

En outre, l'invention permet de diminuer l'encombrement de la fixation du vitrage et permet ainsi de fixer le vitrage plus à l'extérieur, en augmentant de ce fait le volume disponible à l'intérieur du moyen de transport.

L'invention a pour objet, dans son acception la plus large, un vitrage latéral d'un moyen de transport, en particulier un vitrage de tramway, selon la revendication 1. Ce vitrage est un vitrage fixe qui comprend :
- un élément vitré ayant une face extérieure qui fait face à un espace extérieur, une face intérieure qui fait face à un espace intérieur, ainsi qu'un chant périphérique,
- au moins une platine ayant une face extérieure située en vis-à-vis de la face intérieure dudit élément vitré, une face intérieure orientée vers ledit espace intérieur, ainsi qu'un chant périphérique, et ladite face extérieure de ladite platine étant collée à ladite face intérieure dudit élément vitré par l'intermédiaire d'une couche de colle,
- un cordon profilé périphérique, situé au moins en partie sur ladite face intérieure et plus en périphérie de ladite face intérieure dudit élément vitré que ladite platine,
- une tige filetée qui s'étend sensiblement perpendiculairement à ladite face intérieure dudit élément vitré et en direction dudit espace intérieur.

Le vitrage selon l'invention est remarquable en ce que ladite platine présente un trou traversant et débouchant en face extérieure et en face intérieure de la platine et ledit élément vitré présente au moins un trou traversant et débouchant en face extérieure et en face intérieure de l'élément vitré, ledit trou de l'élément vitré étant coaxial avec ledit trou de ladite platine.

Le trou de ladite platine est ainsi situé dans un prolongement de ladite tige filetée en direction dudit espace extérieur.

Ce trou dans la platine est destiné à permettre le passage de la tige filetée en direction de l'espace extérieur et la libre rotation de la tige filetée par rapport à la platine.

De préférence, le pourtour dudit trou de ladite platine est en retrait vers l'espace intérieur par rapport à ladite face extérieure de la platine, afin de faciliter le rattrapage de tolérance par rapport au positionnement nominal du vitrage et de la baie.

Ledit élément vitré présente de préférence plusieurs trous, chacun traversant et débouchant en face extérieure et en face intérieure de l'élément vitré ainsi que plusieurs platines et autant de platines que de trous ; le rattrapage de tolérance entre le vitrage et la baie est plus efficace s'il y a une platine par trou que si une platine est associée à plusieurs trous.

Dans un premier mode de réalisation, l'élément vitré est une feuille unique en verre ou en matière plastique très rigide (par exemple en polycarbonate).

Dans un second mode de réalisation, l'élément vitré est un élément multiple, feuilleté. Dans ce second mode, ledit élément vitré comporte un substrat extérieur, un substrat intérieur et une feuille intercalaire de matière plastique située entre le substrat extérieur et le substrat intérieur, lesdits substrats et ladite feuille de matière plastique présentant chacun un chant et lesdits chants étant de préférence dans la continuité l'un de l'autre.

La ou chaque feuille de matière plastique utilisée pour l'élément vitré feuilleté selon l'invention présente une capacité à renforcer la résistance mécanique en faisant adhérer la feuille de verre disposée dessus au substrat disposé dessous ; dans cet élément vitré feuilleté, au moins une de ces feuilles de matière plastique, voire toutes ces feuilles de matière plastique, peut ou peuvent présenter en outre une capacité d'isolation phonique.

Dans ce second mode de réalisation, la réalisation des trous dans l'élément vitré est plus compliquée car il faut réaliser le perçage avant le feuilletage, mais cette complication est compensée par l'intérêt de l'invention.

Dans une variante, ladite tige filetée comporte de préférence une tête qui est située au moins en partie dans ledit trou et ne dépassant pas de ladite face extérieure dudit élément vitré, afin que la tête soit protégée par l'élément vitré et à la fois qu'elle ne constitue pas un élément saillant qui ferait saillie au-delà de la ligne générale du moyen de transport.

La tête de la tige filetée se trouve appliquée directement ou indirectement contre la face extérieure de la platine lors de la fixation de l'élément vitré ; Le trou dans la platine est ainsi destiné à retenir la tête de la tige filetée afin que la platine puisse transmettre une force de réaction à l'élément vitré lors de l'attache de la tige filetée à la baie de la carrosserie du moyen de transport.

De préférence alors ladite tête de la tige filetée présente une section extérieure dans le trou de l'élément vitré qui est circulaire, ledit trou de l'élément vitré présente une section intérieure circulaire et ledit trou de l'élément vitré présente un diamètre compris entre 1,2 et 1,4 fois le diamètre de ladite section extérieure de ladite tête de la tige filetée, afin de faciliter le rattrapage de tolérance par rapport au positionnement nominal du vitrage et de la baie.

Dans une autre variante, ladite tige filetée comporte une tête qui est située en dehors du trou de l'élément vitré, dans ledit espace extérieur, afin de permettre d'utiliser une tête large, qui permet de mieux tenir l'élément vitré.

Dans cette variante, il y a, de préférence, interposition d'une calle ou d'une rondelle entre la tête et la platine.

Ledit cordon profilé est de préférence complètement périphérique ; il est d'un seul tenant tout autour de l'élément vitré ; il présente de préférence une épaisseur supérieure à la somme de l'épaisseur de ladite couche de colle et de l'épaisseur de ladite platine, afin d'une part d'éviter le contact entre ladite platine et un flasque de carrosserie en vis-à-vis de la platine et d'autre part de maintenir le cordon profilé sous contrainte en compression lors de la fixation du vitrage.

Ladite couche de colle est présente sur la totalité de la surface de la face intérieure dudit élément vitré qui est en vis-à-vis de la face extérieure de ladite platine.

La présente invention se rapporte par ailleurs à un procédé de fixation d'un vitrage latéral fixe dans une baie d'une paroi latérale d'un moyen de transport, en particulier une paroi latérale d'un tramway, ledit vitrage étant selon l'invention, ladite tige filetée étant introduite par le trou dudit élément vitré, puis par ledit trou de ladite platine, en direction dudit espace intérieur, puis un écrou est vissé sur ladite tige filetée contre une feuillure.

Avantageusement, la présente invention permet ainsi de fixer un élément vitré à une baie de carrosserie d'une manière fiable, précise et rapide.

La présente invention permet en particulier d'offrir plusieurs points de liberté dans l'ajustement de la position de la fixation par rapport à la baie de la carrosserie et permet alors de compenser de plus grands écarts dans le positionnement respectif de l'élément vitré et de la fixation par platine vis-à-vis de la baie de la carrosserie.

Avantageusement, la présente invention permet ainsi de réaliser un vitrage multiple fixe, qui présente une vue extérieure lisse, sans élément mécanique plus à l'extérieur que la face extérieure de l'élément vitré.

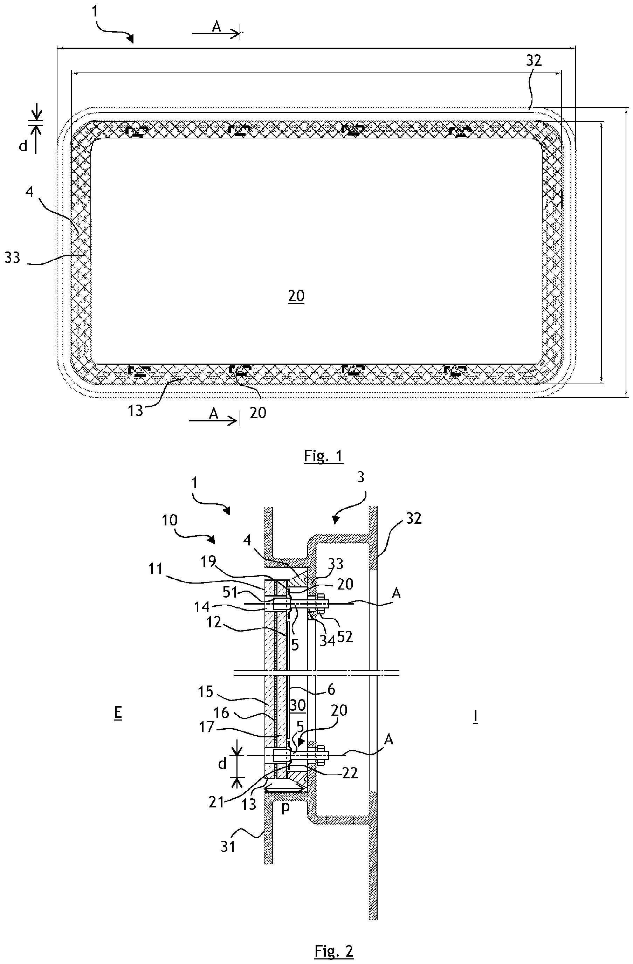

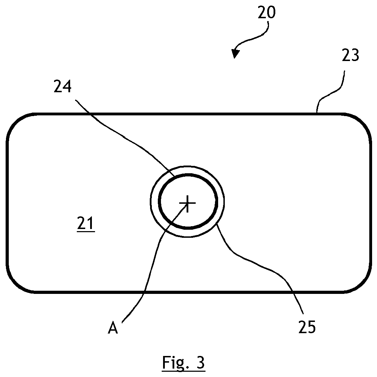

Les détails et les caractéristiques avantageuses de l'invention ressortent de l'exemple non limitatif suivant, illustrés à l'aide des figures ci-jointes illustrant :
- en figure 1, une mode de réalisation d'un vitrage fixe selon l'invention, vu de l'espace intérieur ;
- en figure 2, le vitrage de la figure 1 vu en coupe verticale du vitrage selon AA de cette figure ; et
- en figure 3, la platine de la figure 2, vue de sa face extérieure.

Dans les figures 1 à 3, les proportions entre les dimensions des différents éléments sont respectées afin de faciliter leur lecture ; les mêmes références désignent les mêmes éléments dans toutes les figures.

La figure 1 illustre un vitrage 1 latéral d'un moyen de transport, selon l'invention, tel qu'il peut être vu par un passager situé à l'intérieur de ce moyen de transport.

Il s'agit en particulier d'un vitrage latéral d'un tramway et la figure 1 illustre ainsi ce qu'un passager du tramway voit en regardant sur un côté gauche ou droit par rapport à une direction générale d'avancé du tramway.

Ce vitrage réalise ainsi une séparation verticale entre un espace intérieure I qui est à l'intérieur du tramway et un espace extérieur E qui est à l'extérieur du tramway.

Dans le mode de réalisation de la figure 1, le vitrage 1 est d'un seul tenant, sans fenêtre ouvrable à l'intérieur du vitrage.

Dans l'exemple de réalisation illustré, l'élément vitré 10 est un élément vitré feuilleté comprenant :
- un substrat extérieur 15 qui comporte deux faces principales : une face extérieure qui fait face à l'espace extérieur E et une face intermédiaire qui est à l'opposé de la face extérieure ; ce substrat comporte par ailleurs un chant périphérique,
- un substrat intérieur 17 qui comporte deux faces principales : une face intérieure qui fait face à l'espace intérieur I et une face intermédiaire qui est à l'opposé de la face intérieure ; ce substrat comporte par ailleurs un chant périphérique,
- et une feuille intercalaire de matière plastique 16 située entre le substrat extérieur 15 et le substrat intérieur 17 et qui comporte deux faces principales : l'une orientée vers le substrat extérieur, l'autre orientée vers le substrat intérieur, ainsi qu'un chant périphérique.

Le substrat extérieur 15, la feuille intercalaire de matière plastique 16 et le substrat intérieur 17 sont chacun d'un seul tenant. Ces trois éléments sont superposés de telle sorte que leurs chants respectifs sont dans la continuité les uns des autres. La feuille intercalaire de matière plastique adhère sur chacune de ses faces au substrat qui est positionné contre cette face.

Ce vitrage 1 est un vitrage fixe dans le sens où le vitrage est destiné à être fixé à la structure du moyen de transport (ici le tramway), sans possibilité de bouger par rapport à cette structure lors du fonctionnement du tramway.

L'élément vitré 10 comporte par ailleurs des bords horizontaux haut et bas, ainsi que des bords latéraux gauche et droit (vu de l'intérieur, comme en figure 1).

Le vitrage 1 est destiné à être fixé à une paroi 3 latérale d'un moyen de transport, en particulier une paroi latérale d'un tramway. Plus précisément, il est destiné à être fixé dans une baie 30 d'une telle paroi, afin de la fermer.

Il est toutefois nécessaire que le moyen de fixation du vitrage à la baie qu'il doit fermer puisse être désactivé afin de permettre de changer le vitrage s'il est cassé.

Cette paroi de la baie présente une face extérieure 31 orientée vers l'espace extérieure E et une face intérieure 32 orientée vers l'espace intérieur I.

De préférence, le vitrage 1 ne comporte pas de cordon de colle périphérique qui permettrait de coller les bords du vitrage avec la structure du moyen de transport.

Pour sa fixation dans la baie 30, le vitrage 1 comporte :
- au moins une platine 20, comme visible en figure 3, ayant une face extérieure 21 située en vis-à-vis de la face intérieure 12 de l'élément vitré 10, une face intérieure 22 orientée vers l'espace intérieur I, ainsi qu'un chant périphérique 23, et la face extérieure 21 de la platine 20 est collée à ladite face intérieure 12 de l'élément vitré 10 par l'intermédiaire d'une couche de colle 19, comme visible en figure 2,
- un cordon profilé 4 périphérique, situé, au moins en partie sur la face intérieure 12 et plus en périphérie de la face intérieure 12 de l'élément vitré 10 que la platine 20,
- une tige filetée 5 qui s'étend sensiblement perpendiculairement à la face intérieure 12 de l'élément vitré 10 et en direction de l'espace intérieur I en traversant la platine 20.

La platine 20 est ici une plaque en alliage métallique, d'une épaisseur d'environ 2 mm.

Selon l'invention, la platine 20 présente un trou 24 traversant et débouchant en sa face extérieure 21 et en sa face intérieure 22 et l'élément vitré 10 présente au moins un trou 14 traversant et débouchant en sa face extérieure 11 et en sa face intérieure 12, le trou 14 de l'élément vitré 10 étant coaxial avec le trou 24 de la platine 20.

Comme le trou 24 de la platine a été réalisé avant le collage de la platine à l'élément vitré et que le trou 14 de l'élément vitré a été réalisé avant le collage de la platine à l'élément vitré, c'est lors du collage de la platine à l'élément vitré qu'il faut réaliser correctement la coaxialité.

Ainsi, pour fixer l'élément vitré, il est possible d'introduire la tige filetée 5 par le trou 14 depuis l'espace extérieur en direction de l'espace intérieur I d'appliquer la tête de la tige filetée 5 contre la face extérieure 21 de la platine, d'introduire la tige filetée 5 dans un trou 34 d'une feuillure 33 de la baie 30 puis de visser un écrou 52 sur la tige filetée 5 contre la face intérieure de la feuillure 33 afin de fixer fermement le vitrage à la baie.

Pour cette opération de fixation-blocage, la tige filetée peut être entraînée en rotation sur elle-même par un outil adéquat depuis l'espace extérieur ou être bloquée en rotation depuis l'espace extérieur.

Cette solution permet de réduire la profondeur p de la feuillure 33, telle qu'illustrée en figure 2, par rapport à une face extérieure 31 de la baie, à une valeur inférieure aux solutions de l'art antérieur ; cela permet ainsi d'augmenter l'espace disponible à l'intérieur du moyen de transport.

La profondeur p peut ainsi être entre 20,0 et 90,0 mm ; elle est ici d'environ 60 mm.

Comme visible en figure 1, il est préférable que le vitrage 1 comporte plusieurs platines 20, et donc que l'élément vitré 10 comporte plusieurs trous 14 pour sa fixation dans la baie 30.

Il est possible par exemple de prévoir des platines le longs des bords haut et bas de l'élément vitré 10, par exemple tous les 30 cm (distance entre les axes de deux trous 24).

La tige filetée 5 présente une section extérieure qui est circulaire et le trou 24 de la platine 20 présente aussi une section intérieure circulaire ; le trou 24 de la platine 20 présente un diamètre compris entre 1,1 et 1,4 fois le diamètre de la section extérieure de la tige filetée 5.

Le trou 34 de la feuillure 33 présente aussi un diamètre compris entre 1,1 et 1,4 fois le diamètre de la section extérieure de la tige filetée 5.

La figure 2 illustre la position nominale, c'est-à-dire la position idéale, telle que prévue dans les plans, de la tige filetée 5, tant vis-à-vis de la platine 20 (et donc de l'élément vitré 10), que de la feuillure 33 de la baie 30. Cette feuillure comporte un trou 34 et dans la position idéale, chacun des trous 14, 24, 34 respectivement de l'élément vitré, de la platine et de la feuillure présente un axe et tous les axes sont coaxiaux ; l'axe correspondant est illustré par l'axe A.

Cet axe A est de préférence situé à une distance d comprise entre 10,0 et 40,0 mm du chant 13 de l'élément vitré, et ici de 20,0 mm.

Toutefois, au regard des tolérances de fabrication respectives de l'élément vitré, de la platine et de la feuillure, dans la pratique, il est possible que pour au moins une platine du vitrage la triple coaxialité ne soit pas parfaite alors qu'elle l'est pour une (ou plusieurs) autre(s) du même vitrage.

Ainsi, en choisissant au moins un des trous légèrement plus grand que le diamètre extérieur de la tige filetée, la succession des deux trous 14, 24 permet de faire passer une tige filetée par ses trous en offrant une possibilité de correction de la coaxialité.

Comme visible en figures 2 et 3, le pourtour du trou 24 de la platine 20 est de préférence en retrait vers l'espace intérieur I par rapport à la face extérieure 21, c'est-à-dire que, par exemple, un retrait conique 25 est réalisé tout autour du trou 24 afin de permettre de modifier facilement l'axe de la tige filetée lorsque la tête 50 est en butée contre ce retrait. Cela facilite le rattrapage de tolérances par rapport au positionnement nominal du vitrage et de la baie. L'épaisseur hors tout de la platine 20, avec son retrait conique, est ici de l'ordre de 10,0 mm.

La tête 51 présente ici une section extérieure dans le trou 14 de l'élément vitré 10 qui est circulaire, le trou 14 de l'élément vitré 10 présente aussi une section intérieure circulaire; ledit trou 14 de l'élément vitré 10 présente un diamètre compris entre 1,2 et 1,4 fois le diamètre de ladite section extérieure de la tête 51 afin de faciliter le rattrapage de tolérance par rapport au positionnement nominal du vitrage et de la baie.

L'élément vitré 10 présente de préférence plusieurs trous 14, chacun traversant et débouchant en face extérieure 11 et en face intérieure 12 de l'élément vitré 10 ainsi que plusieurs platines 20 et autant de platines que de trous. En effet, le rattrapage de tolérance entre le vitrage et la baie est plus efficace s'il y a une platine par trou que si une platine, avec plusieurs tiges filetées est associée à plusieurs trous.

Il a été vérifié qu'une tenue mécanique adéquate est obtenue sur la base de l'exemple de la figure 1, lorsque :
- les deux substrats 15, 17 sont chacun en verre qui a subi un traitement destiné à le renforcer, tel qu'un traitement thermique et en particulier un traitement thermique de trempe et sont chacune d'une épaisseur de 1 à 4 mm, par exemple 2 mm,
- la feuille de matière plastique 16 est en PVB et est d'une épaisseur de 0,76 mm.

Dans l'exemple de réalisation illustré, la tige filetée 5 comporte une tête 51 qui est située au moins en partie dans le trou 14 et ne dépasse pas de la face extérieure 11 de l'élément vitré 10 ; Ainsi, à la fois la tête 51 est protégée par l'élément vitré et à la fois qu'elle ne constitue pas un élément saillant qui ferait saillie au-delà de la ligne générale du moyen de transport.

Dans un exemple de réalisation non illustré, il est possible que la tige filetée 5 comporte une tête qui est située en dehors du trou 14, dans ledit espace extérieur, afin de permettre d'utiliser une tête large, qui permet de mieux tenir l'élément vitré.

Le cordon profilé 4 est ici un cordon à double lèvre, dont les deux lèvres sont en contact avec la feuillure 33. Il présente une épaisseur qui est supérieure à la somme de l'épaisseur de la couche de colle 19 (environ 1 mm) et de l'épaisseur de la platine 20 (environ 10 mm), afin d'une part d'éviter le contact entre la platine et la feuillure 33 en vis-à-vis de la platine et d'autre part de maintenir le cordon profilé sous contrainte en compression lors de la fixation du vitrage, afin d'assurer l'étanchéité.

La couche de colle 19 est présente sur la totalité de la surface de la face intérieure 12 de l'élément vitré 10 qui est en vis-à-vis de la face extérieure 21 de la platine 20 afin de maximiser l'accroche de la platine à cette face intérieure.

Eventuellement, le vitrage comporte un film de protection 6 située contre une partie de la face intérieure 12 de l'élément vitré 10 sans que ladite platine 20 comporte un membre de bridage s'étendant plus à l'intérieur sur le film de protection 6.

De préférence ladite tige filetée est sertie sur ladite platine : par exemple elle comporte un épaulement qui l'empêche d'être dévissée hors de ladite platine, afin de faciliter le positionnement du vitrage.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

Il peut être envisagé par exemple que certaines platines de fixation dans le bas de l'élément vitré soient remplacées par des platines de positionnement, ou que d'autres platines soient prévues dans le bas de l'élément vitré contre sa face intérieure pour le positionnement ; de telles platines de positionnement ne permettent pas de réaliser une fixation définitive de l'élément vitré comme une platine à tige filetée, mais permettent un positionnement et/ou un clippage provisoire vis-à-vis de la baie de carrosserie, afin de faciliter la fixation définitive de l'élément vitré par la ou les platines à tige filetée.

Dans une platine de positionnement, la tige filetée est ainsi remplacée par un pion de clippage, fixé à la platine de positionnement.

A titre d'un autre exemple, une platine de positionnement peut présenter en coupe verticale une forme de h, afin que la rainure du h puisse venir à cheval sur la feuillure lors du positionnement du vitrage dans la baie.

Alors, il n'est pas nécessaire qu'un trou soit réalisé dans l'élément vitré en vis-à-vis de la platine de positionnement.

## Revendications

1. Vitrage (1) latéral fixe d'un moyen de transport, en particulier vitrage de tramway, ledit vitrage comprenant :
- un élément vitré (10) ayant une face extérieure (11) qui fait face à un espace extérieur (E), une face intérieure (12) qui fait face à un espace intérieur (I), ainsi qu'un chant périphérique (13),
- au moins une platine (20) ayant une face extérieure (21) située en vis-à-vis de la face intérieure (12) dudit élément vitré (10), une face intérieure (22) orientée vers ledit espace intérieur (I), ainsi qu'un chant périphérique (23), et ladite face extérieure (21) de ladite platine (20) étant collée à ladite face intérieure (12) dudit élément vitré (10) par l'intermédiaire d'une couche de colle (19),
- un cordon profilé (4) périphérique, situé au moins en partie sur ladite face intérieure (12) et plus en périphérie de ladite face intérieure (12) dudit élément vitré (10) que ladite platine (20),
- une tige filetée (5) qui s'étend sensiblement perpendiculairement à ladite face intérieure (12) dudit élément vitré (10) et en direction dudit espace intérieur (1) pour la fixation dudit vitrage (1),
***caractérisé en ce que*** ladite platine (20) présente un trou (24) traversant et débouchant en face extérieure (21) et en face intérieure (22) de la platine (20) pour permettre le passage de ladite tige filetée (5) en direction de l'espace extérieur et la libre rotation de ladite tige filetée (5) par rapport à la platine (20) et ledit élément vitré (10) présente au moins un trou (14) traversant et débouchant en face extérieure (11) et en face intérieure (12) de l'élément vitré (10), ledit trou (14) de l'élément vitré (10) étant coaxial avec ledit trou (24) de ladite platine (20).

2. Vitrage (1) selon la revendication 1, ***caractérisé en ce que*** le pourtour dudit trou (24) de ladite platine (20) est en retrait vers l'espace intérieur (1) par rapport à ladite face extérieure (21).

3. Vitrage (1) selon la revendication 1 ou 2, ***caractérisé en ce que*** ledit élément vitré (10) présente plusieurs trous (14), chacun traversant et débouchant en face extérieure (11) et en face intérieure (12) de l'élément vitré (10) ainsi que plusieurs platines (20) et autant de platines que de trous.

4. Vitrage (1) selon l'une quelconque des revendications 1 à 3, ***caractérisé en ce que*** ledit élément vitré (10) est un élément vitré feuilleté comportant un substrat extérieur (15), un substrat intérieur (17) et une feuille intercalaire de matière plastique (16) située entre le substrat extérieur (15) et le substrat intérieur (17), lesdits substrats et ladite feuille de matière plastique présentant chacun un chant et lesdits chants étant de préférence dans la continuité l'un de l'autre.

5. Vitrage (1) selon l'une quelconque des revendications 1 à 4, ***caractérisé en ce que*** ladite tige filetée (5) comporte une tête (51) qui est située au moins en partie dans ledit trou (14) et ne dépassant pas de ladite face extérieure (11) dudit élément vitré (10).

6. Vitrage (1) selon la revendication 5, ***caractérisé en ce que*** ladite tige filetée (5) comporte une tête (51) présentant une section extérieure dans le trou (14) de l'élément vitré (10) qui est circulaire, ledit trou (14) de l'élément vitré (10) présente une section intérieure circulaire et ledit trou (14) de l'élément vitré (10) présente un diamètre compris entre 1,2 et 1,4 fois le diamètre de ladite section extérieure de ladite tête (51) de la tige filetée (5).

7. Vitrage (1) selon l'une quelconque des revendications 1 à 4, ***caractérisé en ce que*** ladite tige filetée (5) comporte une tête qui est située en dehors dudit trou (14), dans ledit espace extérieur.

8. Vitrage (1) selon l'une quelconque des revendications 1 à 7, ***caractérisé en ce que*** ledit cordon profilé (4) présente une épaisseur supérieure à la somme de l'épaisseur de ladite couche de colle (19) et de l'épaisseur de ladite platine (20).

9. Vitrage (1) selon l'une quelconque des revendications 1 à 8, ***caractérisé en ce que*** ladite couche de colle (19) est présente sur la totalité de la surface de la face intérieure (12) dudit élément vitré (10) qui est en vis-à-vis de la face extérieure (21) de ladite platine (20).

10. Procédé de fixation d'un vitrage (1) latéral fixe dans une baie (30) d'une paroi (3) latérale d'un moyen de transport, en particulier une paroi latérale d'un tramway, ledit vitrage (1) étant selon l'une quelconque des revendications 1 à 9, ***caractérisé en ce que*** ladite tige filetée (5) est introduite par le trou (14) dudit élément vitré (10), puis par le trou (24) de ladite platine (20) ; en direction dudit espace intérieur (I), puis un écrou (52) est vissé sur ladite tige filetée (5) contre une feuillure (33).

## Patentansprüche

1. Feste seitliche Verglasung (1) eines Verkehrsmittels, insbesondere Straßenbahnverglasung, wobei die Verglasung Folgendes umfasst:
- ein verglastes Element (10) mit einer Außenseite (11), die einem Außenraum (E) zugewandt ist, einer Innenseite (12), die einem Innenraum (I) zugewandt ist, sowie einer Umfangskante (13),
- mindestens eine Platte (20) mit einer Außenseite (21), die gegenüber der Innenseite (12) des verglasten Elements (10) angeordnet ist, einer Innenseite (22), die in Richtung des Innenraums (I) ausgerichtet ist, und einer Umfangskante (23), und wobei die Außenseite (21) der Platte (20) mittels einer Klebstoffschicht (19) mit der Innenseite (12) des verglasten Elements (10) verklebt ist,
- eine umlaufende Profilleiste (4), die mindestens teilweise auf der Innenseite (12) und weiter in Richtung des Umfangs der Innenseite (12) des verglasten Elements (10) als die Platte (20) angeordnet ist,
- eine Gewindestange (5), die sich im Wesentlichen senkrecht zu der Innenseite (12) des verglasten Elements (10) und in Richtung des Innenraums (I) zur Befestigung der Verglasung (1) erstreckt,
***dadurch gekennzeichnet, dass*** die Platte (20) eine Durchgangsbohrung (24) aufweist, die durch die Außenseite (21) und die Innenseite (22) der Platte (20) verläuft, um den Durchgang der Gewindestange (5) in Richtung des Außenraumes und eine freie Drehung der Gewindestange (5) relativ zu der Platte (20) zu ermöglichen, und wobei das verglaste Element (10) mindestens eine Durchgangsbohrung (14) aufweist, die durch die Außenseite (11) und die Innenseite (12) des verglasten Elements (10) verläuft, wobei die Bohrung (14) des verglasten Elements (10) koaxial zu dem Loch (24) der Platte (20) ist.

2. Verglasung (1) nach Anspruch 1, ***dadurch gekennzeichnet, dass*** der Umfang der Bohrung (24) der Platte (20) relativ zur Außenseite (21) zum Innenraum (I) hin vertieft ist.

3. Verglasung (1) nach Anspruch 1 oder 2, ***dadurch gekennzeichnet, dass*** das verglaste Element (10) mehrere Durchgangsbohrungen (14) aufweist, die jeweils durch die Außenseite (11) und die Innenseite (12) des verglasten Elements (10) verlaufen, sowie mehrere Platten (20) und so viele Platten, wie Bohrungen vorhanden sind.

4. Verglasung (1) nach einem der Ansprüche 1 bis 3, ***dadurch gekennzeichnet, dass*** das verglaste Element (10) ein laminiertes Glaselement ist, das ein äußeres Substrat (15), ein inneres Substrat (17) und eine Zwischenfolie aus Kunststoffmaterial (16) umfasst, die sich zwischen dem äußeren Substrat (15) und dem inneren Substrat (17) befindet, wobei die Substrate und die Kunststofffolie jeweils eine Kante aufweisen und die Kanten vorzugsweise aufeinander abgestimmt sind.

5. Verglasung (1) nach einem der Ansprüche 1 bis 4, ***dadurch gekennzeichnet, dass*** die Gewindestange (5) einen Kopf (51) umfasst, der mindestens teilweise in der Bohrung (14) angeordnet ist und nicht aus der Außenseite (11) des verglasten Elements (10) herausragt.

6. Verglasung (1) nach Anspruch 5, ***dadurch gekennzeichnet, dass*** die Gewindestange (5) einen Kopf (51) mit einem Außenabschnitt in der Bohrung (14) des verglasten Elements (10) umfasst, der kreisförmig ist, wobei die Bohrung (14) des verglasten Elements (10) einen kreisförmigen Innenabschnitt aufweist und die Bohrung (14) des verglasten Elements (10) einen Durchmesser zwischen dem 1,2- und 1,4-fachen des Durchmessers des Außenabschnitts des Kopfes (51) der Gewindestange (5) aufweist.

7. Verglasung (1) nach einem der Ansprüche 1 bis 4, ***dadurch gekennzeichnet, dass*** die Gewindestange (5) einen Kopf umfasst, der sich außerhalb der Bohrung (14), und zwar im Außenraum befindet.

8. Verglasung (1) nach einem der Ansprüche 1 bis 7, ***dadurch gekennzeichnet, dass*** die Profilleiste (4) eine Dicke aufweist, die größer als die Summe der Dicke der Klebstoffschicht (19) und der Dicke der Platte (20) ist.

9. Verglasung (1) nach einem der Ansprüche 1 bis 8, ***dadurch gekennzeichnet, dass*** die Klebstoffschicht (19) über die gesamte Oberfläche der sich gegenüber der Außenseite (21) der Platte (20) befindenden Innenseite (12) des verglasten Elements (10) vorhanden ist.

10. Verfahren zum Befestigen einer festen seitlichen Verglasung (1) in einer Bucht (30) einer Seitenwand (3) eines Verkehrsmittels, insbesondere einer Seitenwand einer Straßenbahn, wobei es sich bei der Verglasung (1) um die Verglasung nach einem der Ansprüche 1 bis 9 handelt, ***dadurch gekennzeichnet, dass*** die Gewindestange (5) durch die Bohrung (14) des verglasten Elements (10) und dann durch das Loch (24) der Platte (20) eingeführt wird; in Richtung des Innenraums (I), und dann eine Mutter (52) gegen einen Falz (33) auf die Gewindestange (5) geschraubt wird.

## Claims

1. A fixed side glazing (1) for a means of transport, particularly a tramway glazing, said glazing comprising: mounting plate 20
- a glazed element (10) having an exterior face (11) that faces an exterior space (E), an interior face (12) which faces an interior space (I), and a peripheral edge face (13),
- at least one mounting plate (20) having an exterior face (21) situated facing the interior face (12) of said glazed element (10), an interior face (22) oriented toward said interior space (I), and a peripheral edge face (23), and said exterior face (21) of said mounting plate (20) being bonded to said interior face (12) of said glazed element (10) by means of a layer of glue (19),
- a peripheral profiled strip (4), situated at least partly on said interior face (12) and further toward the periphery of said interior face (12) of said glazed element (10) than said mounting plate (20),
- a threaded rod (5) which extends substantially perpendicular to said interior face (12) of said glazed element (10) and in the direction of said interior space (I) for the fixation of the glazing (1),
***characterized in that*** said mounting plate (20) has a hole (24) passing all the way through and opening onto the exterior face (21) and onto the interior face (22) of the mounting plate (20) in order to allow the threaded rod (5) to pass toward the exterior space and to allow the threaded rod (5) to turn freely with respect to the mounting plate (20) and said glazed element (10) has at least one hole (14) passing all the way through and opening onto the exterior face (11) and onto the interior face (12) of the glazed element (10), said hole (14) in the glazed element (10) being coaxial with said hole (24) in said mounting plate (20).

2. The glazing (1) as claimed in claim 1, ***characterized in that*** the periphery of said hole (24) in said mounting plate (20) is set back toward the interior space (I) with respect to said exterior face (21).

3. The glazing (1) as claimed in claim 1 or 2, ***characterized in that*** said glazed element (10) has several holes (14) each passing all the way through and opening onto the exterior face (11) and onto the interior face (12) of the glazed element (10), as well as several mounting plates (20) and as many mounting plates as there are holes.

4. The glazing (1) as claimed in any one of claims 1 to 3, ***characterized in that*** said glazed element (10) is a laminated glazed element comprising an exterior substrate (15), an interior substrate (17) and a plastic interlayer (16) situated between the exterior substrate (15) and the interior substrate (17), said substrates and said sheet of plastic each having an edge face, and said edge faces preferably being in continuity with one another.

5. The glazing (1) as claimed in any one of claims 1 to 4, ***characterized in that*** said threaded rod (5) comprises a head (51) which is situated at least in part inside said hole (14) and does not protrude from said exterior face (11) of said glazed element (10).

6. The glazing (1) as claimed in claim 5, ***characterized in that*** said threaded rod (5) comprises a head (51) having an exterior cross section in the hole (14) of the glazed element (10) that is circular, said hole (14) in the glazed element (10) has a circular interior cross section and said hole (14) in the glazed element (10) has a diameter comprised between 1.2 and 1.4 times the diameter of said exterior cross section of said head (51) of the threaded rod (5).

7. The glazing (1) as claimed in any one of claims 1 to 4, ***characterized in that*** said threaded rod (5) comprises a head which is situated outside of said hole (14), in said exterior space.

8. The glazing (1) as claimed in any one of claims 1 to 7, ***characterized in that*** said profiled strip (4) has a thickness greater than the sum of the thickness of said layer of glue (19) and of the thickness of said mounting plate (20).

9. The glazing (1) as claimed in any one of claims 1 to 8, ***characterized in that*** said layer of glue (19) is present over the entire surface of the interior face (12) of said glazed element (10) that faces the exterior face (21) of said mounting plate (20).

10. A method for fixing a fixed side glazing (1) in an opening (30) of a side wall (3) of a means of transport, particularly a side wall of a tramway, said glazing (1) being in accordance with any one of claims 1 to 9, ***characterized in that*** said threaded rod (5) is introduced into the hole (14) in said glazed element (10), then into the hole (24) in said mounting plate (20), in the direction of said interior space (I), then a nut (52) is screwed onto said threaded rod (5) against a rabbet (33).
